# EUROPEAN PATENT APPLICATION

(11) **EP 1 101 734 A2**
(43) Date of publication of application: **23.05.2001**
(21) Application number: 00125137.0
(22) Date of filing: 17.11.2000
(51) Int. Cl.: C01B 23/00, B01J 20/02, B01D 53/02

(54) **Purification of argon**

(30) Priority: 19.11.1999 US 166677
(71) Applicant: PRAXAIR TECHNOLOGY, INC., Danbury, CT 06810-5113 (US)
(72) Inventor: The designation of the inventor has not yet been filed
(74) Representative: Schwan, Gerhard, Dipl.-Ing.

(57) **Abstract**

A method for purifying of crude argon is disclosed. Trace amounts of oxygen are removed by ultra-fine iron powder adsorbent, which was prepared by attrition milling of metallic iron powder, iron oxide and subsequent reduction or thermal decomposition of certain iron salts as iron citrate etc.

## Description

### Field of invention

This invention relates to methods for preparing highly active iron adsorbent, which can reduce oxygen concentration from argon- or nitrogen down to ppb levels.

### Background of the Invention

Argon is used in a number of processes requiring non-reactive gas atmosphere. Typical applications involve blanketing or purge gas, as heat transfer medium, filler of light bulbs, for the gas removal of reactive impurities in various metals processing technologies, in welding of metals, as inert atmosphere for steel production, in electronics, in the atomization process of molten gases resulting in fine metallic powder, and the like.

Argon is separated by low temperature distillation of liquefied air with an argon side stream column to recover crude argon from a low-pressure column side stream. Crude argon produced via cryogenic separation contains traces of nitrogen (0.01-1%) and oxygen (0.1-7%). The currently practiced separation technology can produce argon with less than 2% oxygen only by reducing recovery to generally unacceptable levels. Because of proximity of boiling points of argon (87.3 K) and oxygen (90.2 K), separation of both gases by distillation is difficult and expensive.

Recovery of oxygen from argon stream by catalytic conversion of oxygen-hydrogen mixture to water is well known and is described, for example, in a paper entitled "Distillation of Air" by R. E. Latimer, Chemical Engineering Progress 35-59, February 1967. Platinum or palladium on a carrier is used as the catalyst. The exit gas must be dried to remove water. The argon stream is cooled down to cryogenic temperatures and by pressure distillation traces of nitrogen and excess hydrogen must be removed. This process is called de-oxo process. A high purity argon stream containing less than 5 ppm can be produced by this technology. This process features significant shortcomings. Water produced, if not completely removed, can frieze and plug the system. For certain world locations hydrogen gas is not easily locally available. The process is complex and very expensive.

In a U.S. Patent No. 5,035,726, discloses argon purification by using oxygen ion penetrating membrane. Argon stream, containing traces of nitrogen is returned to argon-nitrogen separation unit. This type of process must be operated in the proximity of liquefaction/distillation plant. The oxygen transport membrane operates at high temperatures around 700°C; the purified gas must be cooled down to cryogenic temperatures. The membrane does not operate properly at very low concentrations of oxygen and can be easily destroyed; namely Bi₂O₃, which is used as an electrolyte is reduced in oxygen lean environment to sub-oxides and even bismuth metal.

Oxygen can be separated from argon by chemisorption in which oxygen reacts with certain metals supported on a carrier matrix. U.S. Patent No. 3,697,445 and British Patent No. 1,263,132 disclose that nickel on silica matrix can remove oxygen from argon at ambient temperature and can be regenerated by reduction with hydrogen at 200-500°C.

French Patent No. 8400096 discloses using titanium/zirconium alloy to remove oxygen from inert gases at 400-900°C. The authors claim that the alloy can be re-generated by applying vacuum or using reducing atmosphere.

U.S. Patent No. 4,144,038 and No. 4,477,265 disclose the removal of oxygen from argon using aluminosilicate zeolites and molecular sieves.

U.S.S.R. Patent No. 2,995,864 discloses the removal of oxygen impurity from argon by using catalyst, containing oxides of chromium, zinc, aluminum and copper. The saturated adsorbent can be regenerated by nitrogen-hydrogen mixtures.

U.S. Patent No. 4,230,463 discloses a method for the removal of oxygen from argon using polymeric membranes such as polysulfonates, polystyrenes, polycarbonates, polysiloxanes, and the like. Generally speaking, the effectiveness of these membranes is poor and argon penetrates with oxygen through membranes and must be recycled to the crude argon distillation column.

Japanese Patent Application No. 9 45-123711 discloses a nickel adsorbent for removal of oxygen from an inert gas. The catalyst can be regenerated by contacting with hydrogen at 30-200°C.

Barabash in an article "Catalytic and Adsorption Treatment for Removing Oxygen from Inert Gases, Hydrogen-and Methane" published in Chimiceskaja Promyslenost 6,373-4 discloses the use of nickel/Cr₂O₃ adsorbent working between 20-200°C. The adsorbent can be regenerated in a hydrogen stream at 280°C.

### SUMMARY OF THE INVENTION

A process has been invented for preparing active adsorbent, which is capable of removing oxygen from inert gases down to bpm level. The process is based on production of very fine metallic iron powders. Two processes of manufacturing this extremely active powder have been invented: 1) attrition milling of metallic iron powder and 2) thermal decomposition of certain salts of iron.

In particular, this invention is directed to a method for purifying inert gases comprising the steps of a) providing an iron adsorbent; b) depositing the iron adsorbent on a carrier matrix; c) placing the carrier matrix in a reactor; d) activating the iron adsorbent; and e) passing a gas stream containing an inert gas over the carrier matrix under conditions effective to remove impurities from the inert gas.

### BRIEF DESCRIPTION OF THE DRAWINGS

The operations of the invention will be understood and certain of its advantages appreciated from the detailed description which follows read in conjunction with the accompanying drawing, wherein:
Fig. 1 is a graphical representation showing the relationship between the measured specific surface area as a function of the milling time.
Fig. 2 is schematic representation showing a rig (with tubular SS reactor body) for testing oxidation of iron powder (from 0.1 to 100 g), prepared by attrition milling.
Fig. 3 is a graphical representation of the oxygen concentration at the outlet and time for three temperature ranges.
Fig. 4 is a graphical representation of the oxygen concentration at the outlet, the time and the temperature using iron-filtrate over alumina beds, calcinated and then reduced.
Fig. 5 is a graphical representation of the oxygen concentration at the outlet, the time and the temperature using iron-filtrate over alumina beds, calcinated and then reduced having a second catalyst.
Fig. 6 is a graphical representation of the oxygen concentration at the outlet, the time and the temperature using iron-filtrate over alumina beds, calcinated and then reduced for the purification characteristics of argon with 875 ppm oxygen.

### DETAILED DESCRIPTION OF THE PREFERRED EMBODIMENT

### Milling of metals-process description

Milling of materials is of prime interest in modem industry. Grinding is an ancient widespread technological process. Mechanical comminution is restricted to relatively hard, brittle metals, some reactive metals such as beryllium and metal hydrides, ductile metals used to produce metal flakes and chemically embrittled materials such as sensitized stainless steel.

Increasing interest in metal powder with particle sizes that are finer than the particle sizes of powders produced by atomization has reactivated interest in milling. However, overall, milling of metal powders, has received little attention to date.

During milling, four types of forces act on particulate material: impact, attrition, shear and compression. Impact is the instantaneous striking of one object by another. Attrition is the production of wear debris or particles created by rubbing action between two bodies. Shear consists of cutting or cleaving of particles and is usually combined with other type of forces. Shear contributes to fracturing by breaking particles into individual pieces with minimum of fines. Compression is the slow application of compressive forces to a particle body.

Three factors are essential with a decrease in particle size in the course of fine grinding. Liquid and even gas molecules sorbed on the outer surface actively diffuse towards structural defects that are formed during the mechanical destruction. Their atomic fragments were registered at a depth of over 500A, where they chemically interact with the atoms of the solid to form and stabilize numerous defects. As a result, physicochemical and mechanical properties of particles change significantly. Their elasticity is especially sensitive to the environment and, as a result, the specific work of destruction as well. The use of liquid media in mills is accompanied by rheological effects.

Particle size and surface area ranges are associated with different surface forces. For particles with particle size of from about 50-10µ van der Waals forces are predominant and chemisorption is very weak. For particles with 10-0.1µ, the chemisorption is the dominant force. For particles, which are in a nano size domain, the valency forces may play an important role. Nanocrystalline metals, with grain size on the scale of few nanometers, are characterized by high density of grain boundaries. The relatively large volume of atoms located in the grain boundaries result in large differences in physical properties of nanocrystaline materials when compared with corresponding conventional polycrystalline materials with grain sizes in the micron range. Thus a new class of materials is interesting from technological point of view, providing materials with exceptional reactivity.

As a high-energy mill, an attrition mill was used. Milling in an attrition mill is effected by a stirring action of an agitator that has a vertically rotating shaft with horizontal arms. Milling is accomplished by impact and shear forces. The rotating charge of balls and milling product form a vortex at the upper end of the stirring shaft, into which the milling product and balls are drown. The milling product is impacted by balls travelling in various trajectories that collide within dilated charge and powder. Attrition mill can effectively mill metals in inert atmosphere.

Different materials (zirconia, silicon nitride, silicon carbide, stainless steel) and different sizes (from about 2.5-5 mm) of grinding media were used. Vessels from about 0.5-15 liters with amounts from about 20 grams to 4 kilograms of milling material were used. Weight ratio of grinding media to grinding material varied from about 2:1 to 10:1, preferably about 5:1. The milling process could be performed in dry state with or without keeping it in inert atmosphere. If wet milling is used as a liquid media, water or carbohydrate - to prevent oxidation (best toluene) - could be applied. Revolutions per minute vary from about 150-4200.

### Decomposition of iron salts.

A very active material good for chemisorption of oxygen was prepared by thermal decomposition of certain salts of iron, in particular citrates, oxalates, fumarates and tartrates. Typically, these salts will decompose to very fine iron powder, iron oxide and gaseous products as water, CO, C02 and like. The method of catalyst preparation consists of 2 steps:
1. Deposition of iron precursor on the carrier matrix from solution; and
2. Activation of iron precursor.

The second step - activation - can be carried out in two ways:
1. Decomposition of iron precursor in air followed by reduction in reducing atmosphere (pure hydrogen or 0. 1 to 99.9% H2 in argon or nitrogen or carbon monoxide); and
2. Direct reduction of iron precursor in reducing atmosphere (pure hydrogen or 0. 1 to 99.9% H2 in argon or nitrogen or carbon monoxide).

The latter activation method resulted in an adsorbent with higher adsorption capacity.

The purpose of this disclosure is to indicate that iron powder prepared by us in a nanoform size shows an extreme affinity to oxygen and can lower the concentration of oxygen in inert gases to ppb levels.

### Experimental Procedures

Attrition milling of iron and iron oxide powders

Elemental powder of iron (purity 99.5%, particle size of 44µm), iron oxide (purity 99.8%, particle size 44µm) and iron oxide (purity 99+%, particle size <5 gm) were used. The high-energy milling was performed in an attrition mill with silicon nitride or zirconium oxide milling media in an argon stream or in air. After different milling times, a small quantity of material was removed and surface area was measured. After several hundred hours of milling, the material was transferred to tubular SS reactor and the adsorbent was activated in a stream of argon or pure hydrogen, or 0.1 to 99.9% H₂ in argon or nitrogen. The activation temperature was between about 20 and 500°C, preferably about 400°C, the activation time from about 0.5 to 5 hours, preferably about 2.0 hours.

### Decomposition of iron salts.

Iron citrate was dissolved in water and alumina support was soaked by the solution. The resulting material was dried and the dry material was decomposed in air. The decomposed material was reduced in stream of hydrogen. A modified approach, where the calcination step is omitted, was using the hydrogen stream directly for decomposition and reduction. As a rule the second approach resulted in an adsorbent with higher adsorption capacity.

Iron oxalate was mixed with glass wool and poured with alcohol. This mixture was then mixed to achieve good redistribution of iron oxalate powder on the glass wool. The last step consisted of drying to remove alcohol. On 1.0 g of glass wool was deposited about 3.0 g of iron oxalate powder. Finely distributed iron oxalate was loaded onto the reactor and activated-decomposed in reducing atmosphere at elevated temperature.

### Example 1.

This example illustrates the material preparation. Fine iron powder (6-10µm, 99.5 % purity) was used in the grinding attrition mill. The milling charge contained iron powder, grinding media and toluene (99.8% purity). The attrition mill was sealed and the internal gas was flushed by a continuous flow of high purity grade argon (5ppm-max. concentration of oxygen).

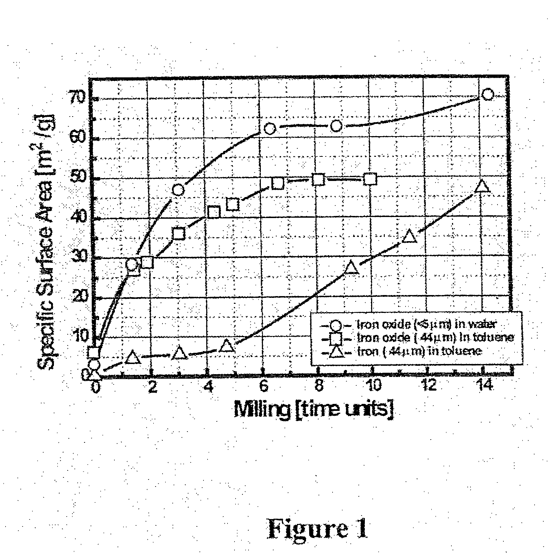

The extent of the milling process was followed by measuring specific surface area as a function of the milling time is presented in Figure 1.

### Example 2.

This example shows preparation of adsorbent precursor. Fine iron oxide (99.8 % purity) was used in the grinding attrition mill. The milling charge contained iron oxide powder, grinding media and 99.8% toluene. The extent of the milling process was followed by measuring specific surface area as a function of the milling time is presented in Figure 1.

### Example 3.

This example shows preparation of adsorbent precursor. Fine iron oxide (<5 µm, 99+% purity) was used in the grinding attrition mill. The milling charge contained iron oxide powder, grinding media and distilled water.

The extent of the milling process was followed by measuring specific surface area as a function of the milling time, as presented in Figure 1.

### Example 4.

Nanoparticles of iron was deposited on a foamy structure. Silicon carbide foam was used for anchoring of ultra-fine iron powder. The slurry was pumped in an inert atmosphere through the layer of the foamed silicon carbide. After 4 hours of operation, 33 wt% of iron was deposited in the macro-porous structure.

### Example 5.

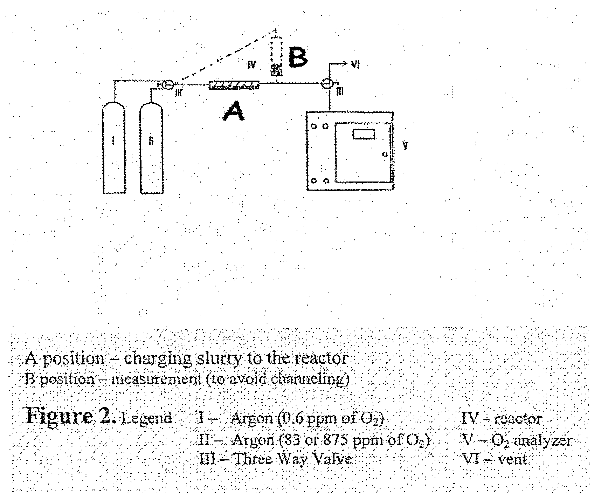

Purification process of ultra-clean argon was conducted using a rig (with tubular SS reactor body) for testing oxidation of iron powder (from 0.1 to 100 g), prepared by attrition milling, as given in Figure 2. The reactor was equipped with a heating coil to increase the temperature. An in-house constructed analyzer with ultra-high precision was used for analysis of the exit gas.

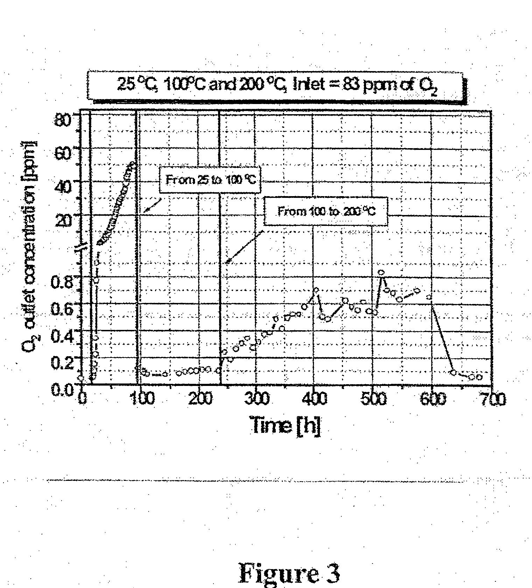

The reactivity of iron was tested at room temperature. For almost 20 hours, the exit concentration of oxygen was around 0.05 ppm. Afterwards, the concentration of oxygen started increasing and in 100 hrs of continuous operation reached 50 ppm. At this moment, the temperature of the reactor was increased from room temperature to 100°C. As a result, the exit concentration dropped to 0.1 ppm and in the next 120 hours, did not change significantly. After 220 hours of operation, the concentration of oxygen again indicated an increasing trend. An increase of temperature to 200°C indicated 370 hours of operation of the oxygen concentration below 0.8 ppm. This long-term experiment is reported in Figure 3.

### Example 6.

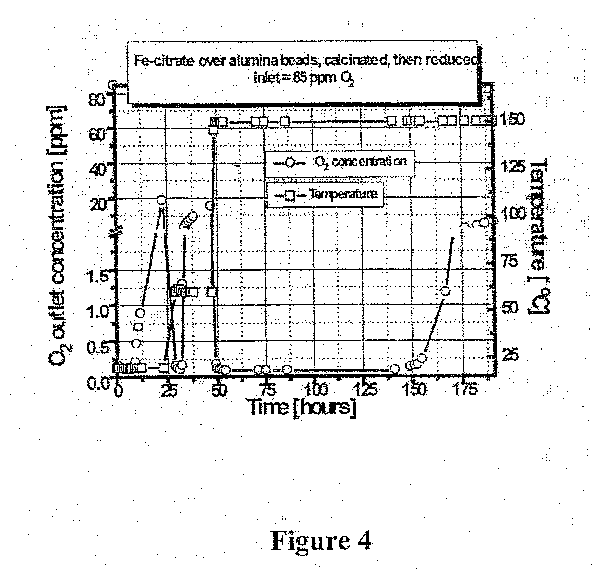

This example illustrated preparation and properties of an adsorbent prepared by thermal decomposition of iron salts. Impregnation of alumina carrier (weight = 44 g, specific surface area = 360 m²/g, total pore volume = 0.5 cm³/g, density = 0.769 g/cm³) was carried out by a solution of iron citrate in water (15.5 g in cca 60 ml of water). The wet material was dried for 3 hours in air at 110°C. The decomposition of the salt was carried out at 150°C for 3 hours in air. The reduction step was accomplished in hydrogen (flow rate -100 ml/min.) at 300°C for 30 min. By passing argon (85 ppm of oxygen at approximately 20°C), the outlet oxygen concentration was lower than 0.1 ppm for about 9 hours. Subsequent increase of reactor temperature to 150°C resulted in outlet concentration lower than 0.1 ppm for 92 hours as shown in Figure 4.

### Example 7.

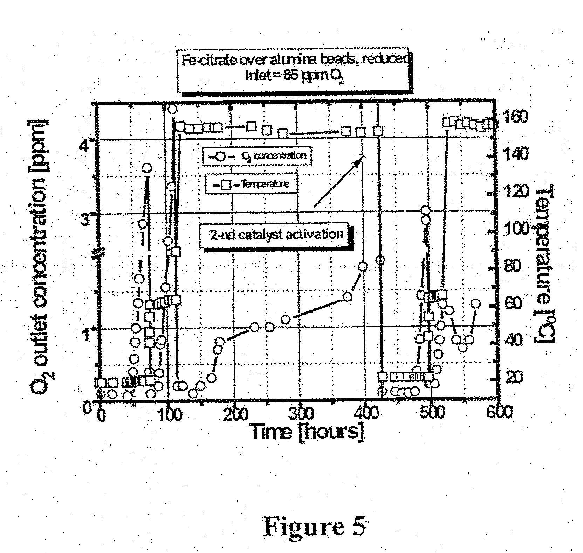

The impregnation of the catalyst was carried out in a similar way as described in Example 6. However, the calcination step (the oxidative decomposition) was omitted. The precursor was directly activated in hydrogen stream. The exit concentration of oxygen dropped from 85 ppm to less than 0.1 ppm and the reactor operated in this regime at room temperature for 42 hours. After increasing the inlet temperature to 150°C the <0.1 ppm exit concentration of oxygen was kept an additional 400 hours. The regenerated adsorbent operated at room temperature 49 hours at exit oxygen concentration below 0.1 ppm and additional 200 hours at 150°C as shown in Figure 5.

### Example 8.

This example illustrated the regeneration ability of the adsorbent. The results of the regeneration procedure are reported in Table 1. It is obvious that regeneration is possible at different operation conditions and the adsorbent does not lose the activity at all.

### Example 9.

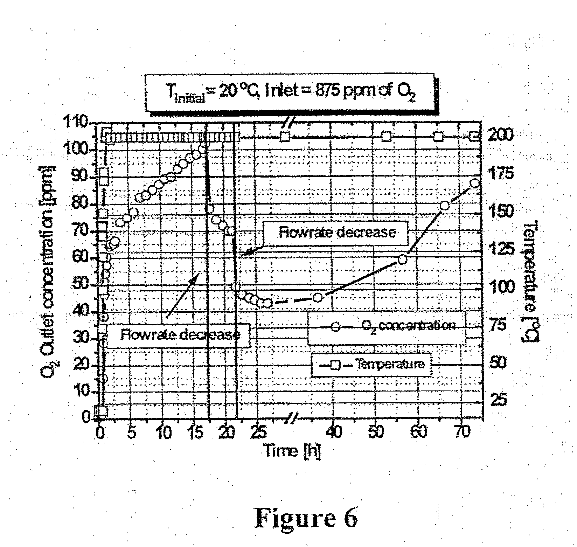

This example illustrates purification of argon with high concentration of oxygen. In this experiment, the purification characteristics of argon with 875 ppm oxygen were investigated. The results of the measurements can be extracted from Figure 6. The metallic iron powder was able to lower the concentration of oxygen by more than an order of magnitude for 70 hours.

### Example 10.

This example illustrates preparation and properties of an adsorbent prepared by thermal decomposition of iron oxalate. 0.25 to 250 g of iron oxalate was deposited with inert beads in tubular reactor. Subsequent reduction was accomplished in 4% of hydrogen in nitrogen at 400°C for 2 hours giving very reactive iron. By passing argon (8.2 ppm, 27 ppm and 80 ppm of oxygen, linear velocity from 0.1 to 30 cm/s) the outlet oxygen concentration was measured at 23, 150 and 250°C until breakthrough occurred (>0.2 ppm of oxygen). Subsequent regenerations were performed showing stable breakthrough adsorption capacity of iron adsorbent (higher breakthrough adsorption capacity for lower inlet concentrations). Corresponding surface area was measured after each experimental run. Results are presented in Table 2.

### Example 11.

This example illustrates preparation and properties of an adsorbent prepared by elemental iron milling in toluene as described in Example 1. 0.1 to 100 g of iron was deposited with inert beads in tubular reactor. Activation was accomplished in 4% of hydrogen in nitrogen at 400°C for 2 hours. By passing argon (8.9 ppm of oxygen, linear velocity from 0.1 to 30 cm/s) the outlet oxygen concentration was measured at 23, 150 and 250°C till breakthrough occurred (>0.2 ppm of oxygen). Subsequent regenerations were performed showing decreasing breakthrough adsorption capacity of iron adsorbent (higher breakthrough adsorption capacity for lower inlet concentrations). Corresponding surface area was measured after each experimental run. Results are presented in Table 3.

### Example 12.

This example illustrates preparation and properties of an adsorbent prepared by thermal decomposition of iron oxalate. 0.25 to 250 g of Iron oxalate was deposited on glass wool in tubular reactor. Subsequent reduction was accomplished in 4% of hydrogen in nitrogen at 400°C for 2 hours giving very reactive iron. By passing argon (8.9 ppm, 27 ppm. and 80 ppm of oxygen, linear velocity from 30 to 100 cm/s) the outlet oxygen concentration was measured at 250°C till breakthrough occurred (> 0.2 ppm. of oxygen). Subsequent regenerations were performed showing first decreasing, then stabilized (between 20-30 ml of O₂/g_{Fe}) breakthrough adsorption capacity of iron adsorbent (higher breakthrough adsorption capacity for lower inlet concentrations). Corresponding surface area was measured after each experimental run. Results are presented in Table 4.

### Example 13.

This example illustrates preparation and properties of an adsorbent prepared by elemental iron milling in toluene as described in Example 1. 0.1 to 100 g of iron was deposited on glass wool in tubular reactor. Activation was accomplished in 4% of hydrogen in nitrogen at 400°C for 2 hours. By passing argon (8.9 ppm, 27 ppm and 80 ppm. of oxygen, linear velocity from 30 to 100 cm/s) the outlet oxygen concentration was measured at 23, 150 and 250°C till breakthrough occurred (> 0.2 ppm of oxygen). Subsequent regenerations were performed showing stable breakthrough adsorption capacity of iron adsorbent (higher breakthrough adsorption capacity for lower inlet concentrations). Corresponding surface area was measured after each regeneration. Results are presented in Table 5.

### Example 14.

This example gives the deposition of nanoparticles of iron, prepared by milling described in Example 1, on a porous beads support. Between 100-300 grams of iron in toluene slurry or iron powder was mixed with 100 grams of beads such as alumina or silica using methanol solvent for fine dispersion of the particles. The beads and toluene mixture was allowed to dry. Between 5-50 grams of iron remained deposited on the beads.

### Example 15.

This example illustrates the purification process of ultra-clean nitrogen for O₂ (in ppm) removal using milled iron. The reactivity of iron prepared in Example 14 was tested at various inlet feed concentrations of ppm O₂ and temperature (°C) as shown in Table 6. The amount of iron used was between 5 and 50 grams. The O₂ loading in ml O₂/grain iron was calculated at 0.2 ppm O₂ breakthrough.

### Example 16.

This example gives the regeneration of iron powder for the values cited in Example 15. Regeneration was done using approximately 2.5% H₂ at 400°C then decreased to 250°C as shown in Table 6. The oxidation-reduction reaction on the ultra fine powder is reversible, for those that could be demonstrated, for example, with runs No. 7 and 8, when the total oxygen load was 729 and 658 ml of oxygen, respectively and oxygen released (calculated from the amount of water removed) was 737 and 618 ml, respectively.

### Example 17.

This example, illustrates the purification process of ultra-clean nitrogen for ppm O₂ removal using iron oxide prepared by milling in toluene. The reactivity of iron oxide prepared in Example 14, was tested at various inlet feed concentrations of ppm O₂ and temperature (°C) as shown in Table 7. The amount of iron oxide used was between 0.5 and 50 grams. The O₂ loading in ml O₂/gram iron was calculated at 0.2 ppm O₂ breakthrough.

### Example 18.

This example illustrates the regeneration of iron oxide for the values derived from Example 17. Regeneration was done using approximately 1.3 and 2.5% H₂ at 250°C and 350°C as shown in Table 7. The oxidation-reduction reaction on the ultra fine powder is reversible, for those that could be demonstrated, for example, with runs No. 13 and 14, when the total oxygen load was 329 and 96 ml of oxygen, respectively and oxygen released (calculated from the amount of water removed) was 266 and 94 ml, respectively. Example 19.

This example illustrates the deposition of iron oxalate powder on glass wool. About 5 to 30 grams of iron oxalate was mixed with about 1 to 10 grams of glass wool and 0.5 to 1.01 of methanol. This slurry was mixed to achieve good distribution of iron oxalate over the glass wool. After that, methanol was evaporated and iron oxalate was reduced in 1.3% of hydrogen in nitrogen at 300°C.

### Example 20.

This example illustrates the purification process of ultra-clean nitrogen for ppm 02 removal using iron prepared by iron oxalate decomposition-reduction. The reactivity of iron oxide prepared in Example 19 was tested at various inlet feed concentrations of ppm O₂ and temperature (°C) as shown in Table 8. The amount of iron used was between 0.5 and 50 grams. The O₂ loading in ml O₂ /gram iron was calculated at 0.2 ppm O₂ breakthrough.

### Example 21.

This example illustrates the regeneration of iron for the values cited in Example 20. Regeneration was done using approximately 1.3 % H₂ at 300°C as shown in Table 8. The oxidation-reduction reaction on the ultra fine powder is reversible for those that could be demonstrated, for example, with runs No. 8 and 9, when the total oxygen load was 535 and 445 ml of oxygen, respectively and oxygen released (calculated from the amount of water removed) was 580 and 498 ml, respectively.

It should be understood that the foregoing description is only illustrative of the invention. Various alternatives and modifications can be devised by those skilled in the art without departing from the invention.

**TABLE 1**

| Activated in hydrogen flow, V=100 ml/min Activity test passing Ar (83 ppm O₂) @ 23°C, 100°C and 150°C | | | | |
|---|---|---|---|---|
| | Activation Temperature [°C] | Activation Time [h] | O₂ uptake [Ml/g_{Fe}] Total | |
| 1. | 100 | 2 | 0.0 | |
| 2. | 150 | 2 | 0.1 | |
| 3. | 200 | 1 | 0.6 | |
| 4. | 200 | 5 | 1.4 | |
| 5. | 400 | 1 | 5.5 | |
| 6. | 400 | 1 | 6.3 | |
| 7. | 400 | 1 | 7.1 | |
| 8. | 400 | 3 | 10.2 | |
| 9. | 400 | 5 | 10.6 | |
| 10. | 400 | 2 | 10.4 | |
| 11. | 400 | 1 | 13.0 | |
| 12. | 350 | 3 | 8.5 | |
| 13. | 300 | 3 | 8.1 | |
| 14. | 300 | 3 | 8.1 | |
| 15. | 300 | 3 | 7.1 | |
| 16. | 400 | 3 | 8.1 | |
| 17. | 300 | 3 | 7.1 | |
| 18. | 300 | 3 | 6.9 | 60.0 |
| 19. | Continued @ 150°C | | 53.1 | |
| 20. | 300 | 3 | 6.7 | 61.7 |
| 21. | Continued @ 100°C | | 55.0 | |

**TABLE 2**

| Iron oxalate deposited with zirconia beads Activated (decomposed) in 4% of H₂ in N₂ flow, experiments @ 23°C, 150°C and 250°C | | | | |
|---|---|---|---|---|
| | Activation Temperature [°C] | Activation Time [h] | 0₂ uptake [ml/g_{Fe}] @ 23,150 Total and 250°C | |
| Activity Test - passing Ar (8.2 ppm of O₂) | | | | |
| 1. | 400 | 2 | 4.4 | 65.0 |
| | Continued at 150°C | | 14.8 | |
| | Continued at 250°C | | 45.8 | |
| 2. | 400 | 2 | 2.9 | 159.6 |
| | Continued at 150°C | | 17.8 | |
| | Continued at 250°C | | 138.9 | |
| 3. | 400 | 2 | 0.0 | 75.3 |
| | Continued at 150°C | | 10.7 | |
| | Continued at 250°C | | 64.6 | |
| 4. | 400 | 2 | 0.7 | 109.6 |
| | Continued at 150°C | | 10.7 | |
| | Continued at 250°C | | 64.6 | |
| 5. | 400 | 2 | 1.2 | 106.4 |
| | Continued at 150°C | | 10.7 | |
| | Continued at 250°C | | 94.5 | |

| Activity Test - passing Ar (80 ppm of O₂), the same adsorbent | | | | |
|---|---|---|---|---|
| 6. | 400 | 2 | 0.0 | 67.4 |
| | Continued at 150°C | | 4.4 | |
| | Continued at 250°C | | 63.0 | |

| Activity test - passing Ar (27 ppm of O₂), the same adsorbent | | | | |
|---|---|---|---|---|
| 7. | 400 | 2 | 0.5 | 100.4 |
| | Continued at 150°C | | 8.4 | |
| | Continued at 250°C | | 91.5 | |
| 8. | 400 | 2 | 0.5 | 92.4 |
| | Continued at 150°C | | 7.9 | |
| | Continued at 250°C | | 84.1 | |
| 9. | 400 | 2 | 0.5 | 89.0 |
| | Continued at 150°C | | 6.9 | |
| | Continued at 250°C | | 81.6 | |
| 10. | 400 | 2 | 1.5 | 130.6 |
| | Continued at 150°C | | 12.9 | |
| | Continued at 250°C | | 116.2 | |
| 11. | 400 | 2 | 0.5 | 101.9 |
| | Continued at 150°C | | 12.4 | |
| | Continued at 250°C | | 89.0 | |
| 12. | 400 | 2 | 1.5 | 112.1 |
| | Continued at 150°C | | 10.4 | |
| | Continued at 250°C | | 100.2 | |
| 13. | 400 | 2 | 0.0 | 112.5 |
| | Continued at 150°C | | 11.1 | |
| | Continued at 250°C | | 101.4 | |
| 14. | 400 | 2 | 0.0 | 122.4 |
| | Continued at 150°C | | 9.9 | |
| | Continued at 250°C | | 112.5 | |
| 15. | 400 | 2 | 0.0 | 112.8 |
| | Continued at 150°C | | 6.4 | |
| | Continued at 250°C | | 106.4 | |
| 16. | 400 | 2 | 1.5 | 114.3 |
| | Continued at 150°C | | 11.4 | |
| | Continued at 250°C | | 101.4 | |
| 17. | 400 | 2 | 1.7 | 132.8 |
| | Continued at 150°C | | 12.4 | |
| | Continued at 250°C | | 118.7 | |

| Activity test - passing Ar (80 ppm of O₂), the same adsorbent | | | | |
|---|---|---|---|---|
| 18. | 400 | 2 | 0.7 | 97.4 |
| | Continued at 150°C | | 7.3 | |
| | Continued at 250°C | | 89.4 | |
| 19. | 400 | 2 | 1.5 | 103.4 |
| | Continued at 150°C | | 8.1 | |
| | Continued at 250°C | | 93.8 | |
| 20. | 400 | 2 | 2.2 | 103.3 |
| | Continued at 150°C | | 8.8 | |
| | Continued at 250°C | | 92.3 | |
| 21. | 400 | 2 | 1.5 | 106.3 |
| | Continued at 150°C | | 8.1 | |
| | Continued at 250°C | | 96.7 | |
| 22. | 400 | 2 | 1.5 | 99.7 |
| | Continued at 150°C | | 8.8 | |
| | Continued at 250°C | | 89.4 | |
| 23. | 400 | 2 | 0.7 | 97.4 |
| | Continued at 150°C | | 8.8 | |
| | Continued at 250°C | | 87.9 | |
| 24. | 400 | 2 | 1.5 | 101.9 |
| | Continued at 150°C | | 8.8 | |
| | Continued at 250°C | | 91.6 | |

| Activity test - passing Ar (27 ppm of O₂), the same adsorbent | | | | |
|---|---|---|---|---|
| 25. | 400 | 2 | 1.2 | 138.3 |
| | Continued at 150°C | | 12.4 | |
| | Continued at 250°C | | 124.7 | |

**TABLE 3**

| Iron milled in toluene, deposited with zirconia beads Activated (decomposed) in 4% of H₂ in N₂ flow, Activity test - passing Ar (8.9 ppm of O₂) @ 23°C, 150°C and 250°C | | | | |
|---|---|---|---|---|
| | Activation Temperature [°C] | Activation Time [h] | 0₂ uptake [ml/g_{Fe}] @ 23,150 Total and 250°C | |
| 1. | 400 | 2 | 1.2 | 51.0 |
| | Continued at 150°C | | 19.4 | |
| | Continued at 250°C | | 30.4 | |
| 2. | 400 | 2 | 1.1 | 41.1 |
| | Continued at 150°C | | 16.0 | |
| | Continued at 250°C | | 24.0 | |
| 3. | 400 | 2 | 1.0 | 34.6 |
| | Continued at 150°C | | 13.9 | |
| | Continued at 250°C | | 19.7 | |
| 4. | 400 | 2 | 0.8 | 38.1 |
| | Continued at 150°C | | 13.6 | |
| | Continued at 250°C | | 23.7 | |

**TABLE 4**

| Iron oxalate deposited on glass wool Activated (decomposed) in 4% of H₂ in N₂ flow, experiments @ 250°C | | | |
|---|---|---|---|
| | Activation Temperature [°C] | Activation Time [h] | 0₂ uptake [ml/g_{Fe}] @ 250°C |
| 1. | 400 | 2 | 152.7 |
| | Measured at 250°C | | |
| 2. | 400 | 2 | 74.0 |
| | Measured at 250°C | | |

| Activity test - passing Ar (8.9 ppm of O₂), the same adsorbent | | | |
|---|---|---|---|
| 3. | 400 | 2 | 80.3 |
| | Measured at 250°C | | |

| Activity test - passing Ar (80 ppm of O₂), the same adsorbent | | | |
|---|---|---|---|
| 4. | 400 | 2 | 34.4 |
| | Measured at 250°C | | |
| 5. | 400 | 2 | 31.1 |
| | Measured at 250°C | | |
| 6. | 400 | 2 | 28.9 |
| | Measured at 250°C | | |
| 7. | 400 | 2 | 27.8 |
| | Measured at 250°C | | |
| 8. | 400 | 2 | 26.9 |
| | Measured at 250°C | | |
| 9. | 400 | 2 | 26.9 |
| | Measured at 250°C | | |
| 10. | 400 | 2 | 28.6 |
| | Measured at 250°C | | |
| 11. | 400 | 2 | 28.6 |
| | Measured at 250°C | | |
| 12. | 400 | 2 | 18.9 |
| | Measured at 250°C | | |
| 13. | 400 | 2 | 25.0 |
| | Measured at 250°C | | |
| 14. | 400 | 2 | 25.0 |
| | Measured at 250°C | | |
| 15. | 400 | 2 | 27.8 |
| | Measured at 250°C | | |

**TABLE 5**

| Iron milled in toluene, deposited on glass wool Activated (decomposed) in 4% of H₂ in N₂ flow, experiments @ 23°C, 150°C and 250°C | | | | |
|---|---|---|---|---|
| | Activation Temperature [°C] | Activation Time [h] | O₂ uptake [ml/g_{Fe}] @ 23,150 Total and 250°C | |
| Activity Test - passing Ar (80 ppm of O₂) | | | | |
| 1. | 400 | 2 | 4.1 | 50.9 |
| | Continued at 150°C | | 4.1 | |
| | Continued at 250°C | | 42.7 | |
| 2. | 400 | 2 | 4.1 | 38.7 |
| | Continued at 150°C | | 4.1 | |
| | Continued at 250°C | | 30.5 | |
| 3. | 400 | 2 | 3.0 | 34.5 |
| | Continued at 150°C | | 3.0 | |
| | Continued at 250°C | | 28.5 | |
| 4. | 400 | 2 | 2.0 | 28.4 |
| | Continued at 150°C | | 2.0 | |
| | Continued at 250°C | | 24.4 | |
| 5. | 400 | 2 | 35.0 | 35.0 |
| | Measured at 250°C | | | |
| 6. | 400 | 2 | 33.5 | 33.5 |
| | Measured at 250°C | | | |

| Activity test - passing Ar (27 ppm of O₂), the same adsorbent | | | | |
|---|---|---|---|---|
| 7. | 400 | 2 | 48.6 | |
| | Measured at 250°C | | | 48.6 |

| Activity test - passing Ar (8.9 ppm of O₂), the same adsorbent | | | | |
|---|---|---|---|---|
| 8. | 400 | 2 | 61.5 | 61.5 |
| | Measured at 250°C | | | |

| Activity test - passing Ar (80 ppm of O₂), the same adsorbent | | | | |
|---|---|---|---|---|
| 9. | 400 | 2 | 27.6 | 27.6 |
| | Measured at 250°C | | | |
| 10. | 400 | 2 | 33.6 | 33.6 |
| | Measured at 250°C | | | |

**TABLE 6**

| Milled Iron Powder (5-50 grams Iron) | | | | | |
|---|---|---|---|---|---|
| Run | O₂/Fe ratio [mlO₂/g_{Fe}] (till 0.2 ppm of O₂) | Oxygen Loading Conditions | | Regeneration Conditions | |
| | | C [ppm] | T[°C] | %H2 | T[°C] |
| 1. | 7.8 | 2.7 | 150° | 2.5 | 400° |
| 2. | - | 9.5 | 150° | 2.5 | 400° |
| 3. | 3.3 | 9.5 | 150° | 2.5 | 400° |
| 4. | - | 1.5 | 150° | 2.5 | 400° |
| 5. | 15.7 | 9.5 | 250° | 2.5 | 400° |
| 6. | 13.5 | 9.5 | 250° | 2.5 | 400° |
| 7. | 12.7 | 9.5 | 250° | 2.5 | 400° |
| 8. | 10.5 | 9.5 | 250° | 2.5 | 400° |
| 9. | 2.0 | 105.0 | 150° | 2.5 | 250° |
| 10. | 9.7 | 9.5 | 250° | 2.5 | 250° |
| 11. | 2.8 | 2.7 | 60° | 2.5 | 250° |
| 12. | 1.7 | 9.5 | 60° | 2.5 | 250° |
| 13. | 7.6 | 9.5 | 250° | 2.5 | 250° |

**TABLE 7**

| Milled Iron Oxide (5-50 grams Iron) | | | | | |
|---|---|---|---|---|---|
| Run | O₂/Fe ratio [mlO₂/gFe] (till 0.2 ppm of O₂) | Oxygen Loading Conditions | | Regeneration Conditions | |
| | | C[ppm] | T[°C] | %H2 | T[°C] |
| 1. | 17.6 | 9.7 | 150° | 2.5 | 350° |
| 2. | 14.9 | 9.7 | 150° | 2.5 | 350° |
| 3. | 56.1 | 9.7 | 250° | 2.5 | 350° |
| 4. | 8.3 | 0.9 | 22° | 2.5 | 350° |
| 5. | 4.2 | 9.7 | 22° | 2.5 | 350° |
| 6. | 48.1 | 0.9 | 150° | 2.5 | 350° |
| 7. | 11.5 | 0.9 | 80° | 2.5 | 350° |
| 8. | 4.7 | 9.7 | 80° | 2.5 | 350° |
| 9. | 13.4 | 9.7 | 150° | 1.3 | 350° |
| 10. | 9.8 | 9.7 | 150° | 2.5 | 250° |
| 11. | 9.4 | 9.7 | 150° | 1.3 | 250° |
| 12. | 9.8 | 9.7 | 150° | 2.5 | 350° |
| 13. | 11.9 | 9.7 | 150° | 1.3 | 350° |
| 14. | 9.8 | 9.7 | 150° | 2.5 | 350° |
| 15. | 46.1 | 9.7 | 250° | 1.3 | 250° |
| 16. | 33.2 | 9.7 | 200° | 1.3 | 300° |
| 17 | 40.4 | 9.7 | 250° | | |

**TABLE 8**

| Milled Iron Oxalate (5-50 grams Iron) | | | | | |
|---|---|---|---|---|---|
| Run | O₂/Fe ratio [mlO₂/gFe] (till 0.2 ppm of O₂) | Oxygen Loading Conditions | | Regeneration Conditions | |
| | | C[ppm] | T[°C] | %H2 | T[°C] |
| 1. | 22.9 | 10.4 | 150° | 1.3 | 300° |
| 2. | 14.6 | 10.4 | 150° | 1.3 | 300° |
| 3. | 11.1 | 10.4 | 150° | 1.3 | 300° |
| 4. | 39.8 | 10.4 | 250° | 1.3 | 300° |
| 5. | 29.3 | 10.4 | 250° | 1.3 | 300° |
| 6. | 24.3 | 10.4 | 250° | 1.3 | 300° |
| 7. | 21.2 | 10.4 | 250° | 1.3 | 300° |
| 8. | 17.9 | 10.4 | 250° | 1.3 | 300° |
| 9. | 17.5 | 10.4 | 250° | 1.3 | 300° |
| 10. | - | 1.2 | 250° | 1.3 | 300° |
| 11. | 7.4 | 1.2 | 60° | 1.3 | 300° |
| 12. | 17.1 | 10.4 | 250° | 1.3 | 300° |
| 13. | 6.3 | 10.1 | 150° | 1.3 | 300° |
| 14. | 13.1 | 10.4 | 250° | 1.3 | |

## Claims

1. A method for purifying inert gases comprising:
a) providing an iron adsorbent;
b) depositing the iron adsorbent on a carrier matrix;
c) placing the carrier matrix in a reactor;
d) activating the iron adsorbent; and
e) passing a gas stream containing an inert gas over the carrier matrix under conditions effective to remove impurities from the inert gas.

2. A method according to claim 1, wherein said step a) comprises:
a) providing a metallic iron powder or iron oxide powder;
b) providing a milling media;
c) placing the metallic iron powder or iron oxide powder and the milling media in a mill; and
d) milling the metallic iron powder or iron oxide powder in the mill under conditions effective to produce the iron adsorbent.

3. A method according to claim 2 further comprising placing a solvent in the mill with the milling-media and the metallic iron powder or iron oxide powder under conditions effective to produce a slurry of iron in solvent.

4. A method according to claim 3, wherein the solvent is selected from the group consisting of hydrocarbons and water.

5. A method according to claim 4, wherein the hydrocarbon is selected from the group consisting of toluene, benzene, hexane, cyclohexane, and mixtures thereof.

6. A method according to claim 2, wherein the metallic iron powder is about 99.5% pure.

7. A method according to claim 2, wherein the mill is an attrition mill or other high-performance mill.

8. A method according to claim 2, wherein the milling media is selected from the group consisting of zirconia, alumina, silicon nitride, silicon carbide, tungsten carbide, stainless steel, and mixtures thereof

9. A method according to claim 2, wherein the milling media is from about I mm to about 5 mm in diameter.

10. A method according to claim 3, wherein the milling media are from about 10% to about 5 0% of the slurry volume.

11. A method according to claim 2, wherein the milling is performed in an inert atmosphere.

12. A method according to claim 11, wherein the milling is performed in a stream of argon.

13. A method according to claim 1, wherein said depositing comprises:
a) mixing a slurry comprising the metallic iron powder or iron oxide powder and a solvent with the carrier matrix and
b) removing the solvent.

14. A method according to claim 1, wherein said - activating comprises:
reducing the iron adsorbent in a reducing atmosphere.

15. A method according to claim 14, wherein the reducing atmosphere is selected from the group consisting of pure hydrogen, 1-99% H₂ in argon, 1-99% H₂ in nitrogen, 1-99% H₂ in helium, and carbon monoxide.
